# EUROPÄISCHE PATENTSCHRIFT

(11) **EP 0 569 746 B1**
(45) Veröffentlichungstag und Bekanntmachung des Hinweises auf die Patenterteilung: **07.10.1998**
(21) Anmeldenummer: 93106514.8
(22) Anmeldetag: 22.04.1993
(51) Int. Cl.: C08L 23/02, C08L 75/04

(54) **Verfahren zum Schweissen von aus Polyolefinen und thermoplastischen Polyurethanen bestehenden Formteilen durch Hochfrequenzschweissung, sowie die Verwendung der Kunststoffzusammensetzung zur Verbesserung der Hochfrequenzschweissbarkeit von Polyolefin-Formteilen**
Process for high frequency welding of articles containing a composition of polyolefins and thermoplastic polyurethanes, and the use of the composition to improve high frequency weldability of polyolefin articles
Procédé de soudage haute-fréquence de pièces à base d'une composition de polyoléfines et de polyuréthanes thermoplastiques et l'utilisation de cette composition pour améliorer le soudabilité haute-fréquence de pièces en polyoléfine

(30) Priorität: 08.05.1992 AT 938/92
(43) Veröffentlichungstag der Anmeldung: 18.11.1993
(73) Patentinhaber: PCD Polymere AG, 4021 Linz (AT); Renolit-Werke GmbH, D-67509 Worms (DE)
(72) Erfinder: Bernreitner, Klaus, Dipl.-Ing., A-4020 Linz (DE); Wolfsberger, Anton, Ing., A-4020 Linz (AT); Stautner, Hans, Dipl.-Ing., W-8090 Reitmehring (DE)
(74) Vertreter: Kunz, Ekkehard, Dr.

(56) Entgegenhaltungen:
- EP-A- 0 347 794
- Section Ch, Week 8240, Derwent Publications Ltd., London, GB; Class A82, AN 82-84635E

## Beschreibung

Die Erfindung betrifft ein Verfahren zum Schweißen von aus Polyolefinen und thermoplastischen Polyurethanen bestehenden Formteilen durch Hochfrequenzschweißung, sowie die Verwendung von thermoplastischen Polyurethanen zur Verbesserung der Hochfrequenzschweißbarkeit von Polyolefin-Formteilen.

Das Schweißen von Kunststofformteilen gelingt besonders vorteilhaft durch Hochfrequenzschweißung. Wie beispielsweise aus US 3,336,173 bekannt ist, können jedoch Polyolefine aufgrund ihres nicht polaren Charakters nicht im Hochfrequenzfeld verschweißt werden. Um auch Polyolefine im Hochfrequenzfeld schweißen zu können, werden gemäß US 3,336,173 die Polyolefine mit Polyamiden gemischt. Formteile aus solchen Mischungen sind zwar hochfrequenzschweißbar, sie besitzen jedoch den Nachteil, daß die erhaltenen Schweißnähte nicht ausreichend fest sind bzw. neben der Schweißnaht reißen.

Das Ziel der Erfindung lag darin, Formteile aus Polyolefinen mit verbesserter Hochfrequenzschweißbarkeit zu finden. Gemäß Erfindung konnte dies durch Zusatz von thermoplastischen Polyurethanen zu den Polyolefinen erreicht werden.

Gegenstand der Erfindung ist demnach ein Verfahren zum Schweißen von thermoplastischen Formteilen, das dadurch gekennzeichnet ist, daß die Formteile, die im wesentlichen
a) 5 bis 80 Gew.% Polyolefine
b) 10 bis 95 Gew.% thermoplastische Polyurethane
c) 0 bis 50 Gew.% Haftvermittler
enthalten, im Hochfrequenzfeld miteinander verschweißt werden. Die Formteile enthalten bevorzugt im wesentlichen 5 bis 80 Gew.% Polyolefine, 10 bis 94,5 Gew. % thermoplastische Polyurethane und 0,5 bis 50 Gew.% Haftvermittler. Besonders bevorzugt sind Formteile, die im wesentlichen 10 bis 75 Gew.% Polyolefine, 20 bis 60 Gew.% thermoplastische Polyurethane und 5 bis 30 Gew.% Haftvermittler enthalten.

Ein weiterer Gegenstand der Erfindung ist die Verwendung von 10 bis 95 Gew.% thermoplastischer Polyurethane und 0 bis 50 Gew. % Haftvermittler, bezogen auf die Gesamtmenge der Polyolefine, Polyurethane und Haftvermittler, als Zusatz zu Polyolefinen zur Verbesserung der Hochfrequenzschweißbarkeit von Polyolefin-Formteilen.

Als Polyolefine können insbesondere Polyethylene, Polypropylene, Polybutylene, Polymethylpenten, sowie deren Copolymere eingesetzt werden. Auch die Verwendung von Kunststoffen auf Basis von EPDM (Ethylen-Propylen-Dien-Monomere) ist möglich. Es ist jedoch auch möglich andere Polyolefine, wie sie beispielsweise in der US 3,336,173 oder EP-A-406.568 beschrieben sind, einzusetzen. Als thermoplastische Polyurethane kommen beispielsweise solche in Frage, wie sie in Houben-Weyl, Methoden der Organischen Chemie, 4. Auflage, Band E20, Seiten 1561 - 1721 beschrieben sind. Polyolefine und thermoplastische Polyurethane sind auch kommerziell erhältlich, beispielsweise Polyethylene und Polypropylene als Daplen-Typen bei Fa. PCD Polymere bzw. thermoplastische Polyurethane als Elastollan bei Fa. Elastogran oder als Estane bei Fa. BF Goodrich Chemical. Durch Zusatz von Haftvermittlern zu den Polyolefin-Polyurethan-Zusammensetzungen werden zum Teil noch weitere Verbesserungen der Eigenschaften erzielt. Als Haftvermittler können beispielsweise olefinisch ungesättigte Carbonsäuren oder Carbonsäurederivate, Ethylenmethylacrylat, Ethylacrylsäure, Ionomere, Ethylenvinylacetat, mit ungesättigten Carbonsäuren oder mit Anhydrid modifiziertes Polypropylen, Polyethyloxazoline oder Stearylstearamid, wie sie beispielsweise in der EP-A-406.568 beschrieben sind, verwendet werden. Besonders geeignet als Haftvermittler erweisen sich mit Maleinsäureanhydrid gepfropfte Polypropylene, beispielsweise Admer^{(R)} von Mitsui Petrochemical, sowie Styrol- und Ethylenbutylen-Blöcke enthaltende, vorzugsweise mit Maleinsäureanhydrid gepfropfte Copolymere, wie sie beispielsweise als Kraton^{(R)} bei Shell zur Verbesserung der Schlagzähigkeit von Polyamiden kommerziell erhältlich sind.

Die Polyolefin-Polyurethan-Zusammensetzungen können zusätzlich übliche Additive, wie z. B. Füllstoffe, beispielsweise Kreide oder Talkum, Verstärkungsfasern, Verarbeitungshilfsmittel, Pigmente, Stabilisatoren oder Schlagzähigkeitsmodifikatoren enthalten. Als Formteile sind z. B. Folien, Bänder, Platten, Profile oder Rohre zu verstehen.

Das Hochfrequenzschweißen erfolgt nach bekannten Verfahren und mit bekannten Maschinen, wie sie beispielsweise zum Schweißen von PVC verwendet werden. Üblicherweise werden hochfrequente Wechselfelder von etwa 8 bis 200 MHZ, bevorzugt im Bereich von etwa 20 bis 50 MHz, angewendet.

An den gemäß den folgenden Beispielen erhaltenen Folien wurden folgende Eigenschaften in Längs- (1) und Quer- (q) richtung gemessen:
- Bruchspannung (N/mm²):: DIN 53455
- Bruchdehnung (%):: DIN 53455
- Durchreißfestigkeit (N/mm):: ISO 6383/2
- Zähigkeitsprüfung, Dynatest:: DIN 53373
- Fs max (N/mm): - Maximalkraft
- W ges (J/mm): - Gesamtarbeit

Die Festigkeit der Schweißnähte wurde durch Messung der Scherkraft (N), der Scherspannung (N/mm²) und der Scherdehnung (%) gemäß DIN 29971 in Längs- (1) und Quer- (q) richtung geprüft. Die Eigenschaftswerte sind in Tabelle 1 zusammengestellt.

In den Beispielen wurden folgende Einsatzstoffe verwendet:
- PP:: Polypropylen-Blockcopolymer, MFI = 5 g/10 min (melt flow index 230°C/2,16 kg) (DAPLEN FFC 2012, PCD Polymere)
- PE:: Very Low Density Polyethylene, MFI = 1 g/10 min (melt flow index 190°C/2,16 kg) (Norsoflex FW 1600, CdF Chimie E.P.)
- TPUR 1:: Thermoplastisches Polyurethan-Elastomer, Shore-Härte A= 87 (DIN 53505),Elastollan 1185 A (Fa. Elastogran Polyurethane)
- TPUR 2:: Thermoplastisches Polyurethan-Elastomer, Shore-Härte A= 80 (DIN 53505), Estane 58201 (Fa. BF Goodrich Chemical)
- HV 1:: Haftvermittler, mit Maleinsäureanhydrid gepfropftes Copolymer aus Styrol- und Ethylenbutylen-Blöcken (Kraton G 1901, Shell)
- HV 2:: Haftvermittler, mit Maleinsäureanhydrid gepfropftes Polypropylen , MFI = 3 g/10 min (melt flow index 230°C/2,16 kg) (Admer QF 500 E, Mitsui Petrochemical)

### Beispiel 1

In einem Trommelmischer wurden 75 Gew.Teile Polypropylen (PP)-Copolymer (Daplen^{R} FFC 2012, PCD Polymere), 20 Gew.Teile thermoplastisches Polyurethan (TPUR 2, Estane 58201, BF Goodrich Chemical) und 5 Gew.Teile eines Copolymers aus Styrol- und Ethylenbutylen-Blöcken (HV 1, Kraton^{R} G 1901 X, Shell) als Haftvermittler gemischt und anschließend auf einem Zweischneckenkneter bei 255°C aufgeschmolzen, geknetet, extrudiert und granuliert. Aus den Granulaten wurde auf einem Einschneckenextruder bei 270 °C eine 0,4 mm dicke Folie extrudiert. Die Folieneigenschaften sind in Tabelle 1 zusammengestellt.
Zwei der erhaltenen Folienblätter wurden anschließend auf einer Hochfrequenzschweißanlage der Type KF 600-G 4000 Sd von Fa. Kiefel bei Raumtemperatur verschweißt.

Folgende Schweißparameter wurden eingestellt:

| | |
|---|---|
| Schweißdruck | 375 kp |
| Schweißzeit | 3 sec |
| Anodenstrom | 0,46 A |
| Schweißspannung | 2,5 kV |
| Elektrode | 100 x 4 mm |

Die Eigenschaftswerte der Schweißnähte sind in Tabelle 1 zusammengestellt.

### Beispiele 2 bis 7

Analog zu Beispiel 1 wurden Folien hergestellt und verschweißt, wobei jedoch die in Tabelle 1 angegebenen Einsatzstoffe und Mengen verwendet wurden. Es wurden Folien mit sehr guten mechanischen Eigenschaften erhalten, die gut verschweißbar waren und feste und homogene Schweißnähte bildeten. Die Eigenschaftswerte für die Folien und Schweißnähte sind in Tabelle 1 zusammengestellt.

**Tabelle 1:**

| Zusammensetzung der Thermoplast-Mischungen (in Gew. Teilen) sowie Eigenschaften der Folien und Schweißnähte | | | | | | | | |
|---|---|---|---|---|---|---|---|---|
| Beispiel | | 1 | 2 | 3 | 4 | 5 | 6 | 7 |
| PP | | 75 | 65 | 70 | 50 | 30 | 39,5 | |
| PE | | | | | | | | 70 |
| TPUR 1 | | | | | | 60 | 60 | 20 |
| TPUR 2 | | 20 | 30 | 30 | 40 | | | |
| HV 1 | | 5 | 5 | | | 10 | 0,5 | 10 |
| HV 2 | | | | | 10 | | | |
| | | | | | | | | |

| Eigenschaften der Folien Bruchspannung | 1 | 26,6 | 23,9 | 15,5 | 20,1 | 25,9 | 5,8 | 13,8 |
|---|---|---|---|---|---|---|---|---|
| (N/mm²) | q | 13,3 | 15,0 | 12,4 | 14,8 | 18,3 | 5,3 | 11,6 |
| Bruchdehnung | 1 | 829 | 804 | 11 | 582 | 790 | 18 | 499 |
| (%) | q | 12 | 9 | 5 | 8 | 757 | 19 | 531 |
| Durchreißfestig- | 1 | 38 | 44 | 3 | 14 | 30 | 19 | 55 |
| keit (N/mm) | q | 108 | 117 | 23 | 67 | 132 | 52 | 181 |

| Dynatest: | | | | | | | | |
|---|---|---|---|---|---|---|---|---|
| Fs max (N/mm) | | 862 | 1016 | 464 | 548 | 1094 | 664 | 987 |
| W ges (J/mm) | | 12 | 13 | 2 | 6 | 23 | 16 | 14 |
| | | | | | | | | |
| Eigenschaften der Schweißnähte max. Scherkraft | 1 | 94 | 108 | 75 | 74 | 46 | 21 | 46 |
| (N) | q | 62 | 82 | 73 | 45 | 35 | 18 | 31 |
| Scherspannung | 1 | 8,2 | 8,9 | 6,3 | 7,4 | 14,0 | 7,0 | 6,4 |
| (N/mm²) | q | 6,1 | 6,9 | 7,3 | 4,5 | 11,2 | 5,5 | 5,2 |
| (Scherdehnung | 1 | 14 | 15 | 6 | 14 | 525 | 460 | 790 |
| (%) | q | 10 | 13 | 12 | 10 | 470 | 440 | 650 |

## Patentansprüche

1. Verfahren zum Schweißen von thermoplastischen Formteilen, dadurch gekennzeichnet, daß Formteile, die im wesentlichen
a) 5 bis 80 Gew.% Polyolefine
b) 10 bis 95 Gew.% thermoplastische Polyurethane
c) 0 bis 50 Gew.% Haftvermittler
enthalten, im Hochfrequenzfeld miteinander verschweißt werden.

2. Verfahren zum Schweißen von Formteilen gemäß Anspruch 1, dadurch gekennzeichnet, daß die Formteile im wesentlichen
a) 5 bis 80 Gew. % Polyolefine
b) 10 bis 94,5 Gew.% thermoplastische Polyurethane
c) 0,5 bis 50 Gew. % Haftvermittler
enhalten.

3. Verfahren zum Schweißen von Formteilen gemäß Anspruch 2, dadurch gekennzeichnet, daß die Formteile im wesentlichen
a) 10 bis 75 Gew. % Polyolefine
b) 20 bis 60 Gew. % thermoplastische Polyurethane
c) 5 bis 30 Gew. % Haftvermittler
enthalten.

4. Verfahren zum Schweißen von Formteilen, gemäß einem der Ansprüche 1 bis 3, dadurch gekennzeichnet, daß der Haftvermittler ein mit Maleinsäureanhydrid gepfropftes Polypropylen oder ein gegebenenfalls mit Maleinsäureanhydrid gepfropftes Copolymer aus Styrol- und Ethylenbutylen-Blöcken ist.

5. Verwendung von 10 bis 95 Gew.% thermoplastischer Polyurethane und 0 bis 50 Gew. % Haftvermittler, bezogen auf die Gesamtmenge der Polyolefine, Polyurethane und Haftvermittler, als Zusatz zu Polyolefinen zur Verbesserung der Hochfrequenzschweißbarkeit von Polyolefin-Formteilen.

## Claims

1. Process for welding shaped thermoplastic articles, characterized in that shaped articles, which essentially contain
a) from 5 to 80% by weight of polyolefins
b) from 10 to 95% by weight of thermoplastic polyurethanes
c) from 0 to 50% by weight of compatibilizers,
are welded to one another in a high frequency field.

2. Process for welding shaped articles according to Claim 1, characterized in that the shaped articles essentially contain
a) from 5 to 80% by weight of polyolefins
b) from 10 to 94.5% by weight of thermoplastic polyurethanes
c) from 0.5 to 50% by weight of compatibilizers.

3. Process for welding shaped articles according to Claim 2, characterized in that the shaped articles essentially contain
a) from 10 to 75% by weight of polyolefins
b) from 20 to 60% by weight of thermoplastic polyurethanes
c) from 5 to 30% by weight of compatibilizers.

4. Process for welding shaped articles, according to any of Claims 1 to 3, characterized in that the compatibilizer is a polypropylene grafted with maleic anhydride or a copolymer comprising styrene and ethylene-butylene blocks and optionally grafted with maleic anhydride.

5. Use of from 10 to 95% by weight of thermoplastic polyurethanes and from 0 to 50% by weight of compatibilizers, based on the total amount of the polyolefins, polyurethanes and compatibilizers, as an additive to polyolefins for improving the high-frequency weldability of shaped polyolefin articles.

## Revendications

1. Procédé de soudage de pièces moulées thermoplastiques, caractérisé en ce que des pièces moulées, qui contiennent pour l'essentiel
a) de 5 à 80% en poids de polyoléfines
b) de 10 à 95% en poids de polyuréthannes thermoplastiques
c) de 0 à 50% en poids d'agents de couplage
sont soudées les unes aux autres dans un champ de haute fréquence.

2. Procédé de soudage de pièces moulées selon la revendication 1, caractérisé en ce que les pièces moulées contiennent pour l'essentiel
a) de 5 à 80% en poids de polyoléfines
b) de 10 à 94,5% en poids de polyuréthannes thermoplastiques
c) de 0,5 à 50% en poids d'agents de couplage.

3. Procédé de soudage de pièces moulées selon la revendication 2, caractérisé en ce que les pièces moulées contiennent pour l'essentiel
a) de 10 à 75% en poids de polyoléfines
b) de 20 à 60% en poids de polyuréthannes thermoplastiques
c) de 5 à 30% en poids d'agents de couplage.

4. Procédé de soudage de pièces moulées selon l'une quelconque des revendications 1 à 3, caractérisé en ce que l'agent de couplage est un polypropylène sur lequel de l'anhydride maléique a été greffé ou un copolymère à base de blocs styrène et éthylène-butylène, sur lequel de l'anhydride maléique a été éventuellement greffé.

5. Utilisation de 10 à 95% en poids de polyuréthannes thermoplastiques et de 0 à 50% en poids d'agents de couplage, par rapport à la quantité totale des polyoléfines, polyuréthannes et agents de couplage, en tant qu'additif pour des polyoléfines en vue de l'amélioration de la soudabilité en haute fréquence de pièces moulées polyoléfiniques.
